# EUROPÄISCHE PATENTSCHRIFT

(11) **EP 1 031 411 B1**
(45) Veröffentlichungstag und Bekanntmachung des Hinweises auf die Patenterteilung: **17.12.2003**
(21) Anmeldenummer: 00101125.3
(22) Anmeldetag: 21.01.2000
(51) Int. Cl.: B32B 27/34, B32B 27/36, C08L 67/02, C08L 77/00, C09J 167/02, C09J 177/00

(54) **Mehrschichtverbund**
Multilayer composite
Composite multicouche

(30) Priorität: 27.02.1999 DE 19908640
(43) Veröffentlichungstag der Anmeldung: 30.08.2000
(73) Patentinhaber: Degussa AG, 40474 Düsseldorf (DE)
(72) Erfinder: Häger, Harald, Dr., 45772 Marl (DE); Schmitz, Guido, Dr., 48249 Dülmen (DE); Baumann, Franz-Erich, Dr., 48249 Dülmen (DE); Franzmann, Giselher, Dr., 58453 Witten (DE); Oenbrink, Georg, Dr., 48249 Dülmen (DE)

(56) Entgegenhaltungen:
- US-A- 3 686 069
- US-A- 4 217 435

## Beschreibung

Gegenstand der Erfindung ist ein Haftvermittler für einen Verbund aus einer Polyamidschicht und einer Polyesterschicht sowie ein Mehrschichtverbund, der diesen Haftvermittler enthält.

Polyamide bzw. Polyester sind für sich alleine für viele Anwendungen ungeeignet. So sind Polyamide beispielsweise nicht witterungsbeständig, da sie unter Belichtung altern sowie Luftfeuchtigkeit aufnehmen. Dies führt zu Verfärbung, Verschlechterung der mechanischen Eigenschaften sowie Verzugserscheinungen.

Obwohl Polyamide gute mechanische Eigenschaften, insbesondere gute Zähigkeit, aufweisen, haben sie eine schlechte Sperrwirkung. Insbesondere polare Substanzen können leicht durch Polyamide migrieren. Dies ist beispielsweise bei Kraftstoffleitungen, in denen alkoholhaltiger Kraftstoff gefördert wird, äußerst nachteilig.

Polyester sind im allgemeinen gut witterungsbeständig und besitzen eine ausgezeichnete Sperrwirkung sowohl gegenüber polaren als auch gegenüber unpolaren Medien. Sie sind jedoch in der Regel schlagempfindlich; insbesondere die Kerbschlagzähigkeit ist bei Polyestern häufig nicht ausreichend. Deshalb können Polyester in vielen Fällen, in denen andere Eigenschaften wie deren ausgezeichnete Sperrwirkung, hohe Temperaturbeständigkeit und gute Steifigkeit eigentlich erwünscht wären, für sich alleine nicht verwendet werden.

Es wäre daher wünschenswert, wenn es gelänge, einen festen Verbund zwischen Polyamid und Polyester herzustellen. Damit wäre es möglich, beispielsweise Formkörper aus Polyamid durch Beschichten mit Polyester vor Licht und Feuchtigkeit zu schützen. Genauso könnte ein Formkörper aus Polyester durch Beschichten mit Polyamid vor chemischen und mechanischen Einflüssen geschützt werden. Weiterhin würde damit die Möglichkeit bestehen, Kraftstoffleitungen, die üblicherweise aus einem Polyamid (PA) wie PA 6, PA 11 oder PA 12 bestehen, mit einer Sperrschicht gegenüber Kraftstoff, insbesondere gegenüber alkoholhaltigem Kraftstoff, zu versehen.

Verbunde aus Polyamid und Polyester sind im Prinzip schon bekannt. In der EP-A-0 336 806 wird die Coextrusion von PA 12 und Polybutylenterephthalat (PBT) zu einem Zweischichtrohr beschrieben. In der DE-PS 38 27 092 wird ein Mehrschichtrohr beschrieben, das von innen nach außen Schichten aus Polyamid, Polyvinylalkohol, Polyamid und Polyester besitzt. Es ist allerdings dem Fachmann bekannt, daß die weitaus meisten Polymere, auch Polyamide und Polyester, miteinander unverträglich sind, weshalb bei der Herstellung von Polymerlaminaten keine Haftung zwischen den Laminatschichten erreicht wird. Ein fester Verbund zwischen den einzelnen Polymerschichten ist aber bei den üblichen technischen Anwendungen unbedingt erforderlich.

An sich würde naheliegen, Polyester- und Polyamidschicht durch einen Haftvermittler zu verbinden, der aus einer Mischung aus Polyamid und Polyester besteht. Allerdings sind solche Blends, die beispielsweise durch Schmelzemischen in einem Extruder hergestellt werden, sehr spröde. Entsprechende Coextrusionsversuche zu Polyamid und Polyester zeigen entweder Haftung zum Polyamid oder zum Polyester, nie aber zu beiden Polymeren gleichzeitig.

In der US-A-4 217 435 wird eine Mischung bestimmter Polyester und Polyamide offenbart, die als Schmelzkleber verwendet wird.

Die US-A-3 686 069 offenbart einen Verbundkörper aus Polyethylenterephthalat, Polyamid und einem Haftvermittler, der zu 20 bis 80 Gew.-% aus Polyethylenterephthalat und zu 80 bis 20 Gew.-% aus Polyamid besteht.

Die EP-A-0 509 211 beschreibt thermoplastische Mehrschichtverbunde, bei denen eine Schicht aus einer Polyamidformmasse und eine Schicht aus einer Polyesterformmasse durch einen Haftvermittler verbunden ist, der eine Mischung aus Polyamid und Polyester enthält. Da hier die oben diskutierten Probleme auftreten, liegt in einer bevorzugten Ausführungsform beim Haftvermittler zumindest ein Teil des Polyamidanteils und des Polyesteranteils als Polyamid-Polyester-Blockcopolymer vor. Die Herstellung derartiger Blockcopolymerer ist jedoch nicht ganz einfach und erfordert den Zusatz von Hilfsstoffen oder Katalysatoren, die bei anschließender Verwendung des Mehrschichtverbundes im Lebensmittelsektor nicht unbedenklich sind.

Außerdem ist eine genaue Kontrolle der Endgruppen erforderlich, da die Blockcopolymere durch Verknüpfung geeigneter Endgruppen hergestellt werden und daher sichergestellt sein muß, daß die passenden Endgruppen in ausreichender Konzentration vorliegen. Da Handelsprodukte an diese Erfordernisse nicht angepaßt sind, muß man Sondertypen herstellen, die anschließend zu einem Blockcopolymer umgesetzt werden. Die Produktion derartiger Haftvermittler ist daher mit einem unangemessen hohen Aufwand verbunden. Dies gilt in noch gesteigertem Maße für die Blockcopolyesteramide, die im Verfahren der EP-A-0 837 088 als Haftvermittler in Polyamid-Polyester-Mehrschichtverbunden eingesetzt werden.

Die Aufgabe der Erfindung bestand darin, einen preisgünstigen, leicht herzustellenden, aber trotzdem wirksamen Haftvermittler für einen Mehrschichtverbund aus Polyamid- und Polyesterschicht bereitzustellen. Bei einem derartigen Mehrschichtverbund sollte auch im Kontakt mit Reagenzien wie z. B. Kraftstoff oder Lösemitteln sowie bei höherer Temperatur die Schichtenhaftung erhalten bleiben.

Diese Aufgäbe wurde durch einen thermoplastischen Mehrschichtverbund gelöst, der folgende Schichten enthält:
I. eine Schicht I aus einer Polyamid-Formmasse;
II. eine Schicht II aus einer Polyester-Formmasse;
dazwischen eine Schicht aus einem Haftvermittler, der zu mindestens 50 Gew.-%, bevorzugt zu mindestens 70 Gew.-% und besonders bevorzugt zu mindestens 90 Gew.-% ein Blend aus folgenden Komponenten enthält
a) 20 bis 80 Gew.-%, bevorzugt 30 bis 70 Gew.-% und besonders bevorzugt 40 bis 60 Gew.-% eines Polyamids, hergestellt aus
   α) einem Diamin mit 6 bis 12 C-Atomen sowie
   β) einer hierzu im wesentlichen stöchiometrisch äquivalenten Menge von Dicarbonsäure, wobei die Dicarbonsäure mindestens 5 Mol-%, bevorzugt mindestens 15 Mol-% und besonders bevorzugt mindestens 25 Mol-% einer Dicarbonsäure mit 10 bis 36 C-Atomen enthält,
   sowie
b) 80 bis 20 Gew.-%, bevorzugt 70 bis 30 Gew.-% und besonders bevorzugt 60 bis 40 Gew.-% eines Polyesters, hergestellt aus
   α) einem Gemisch aus 30 bis 95 Mol-%, bevorzugt 50 bis 93 Mol-% und besonders bevorzugt 70 bis 90 Mol-% einer aromatischen Dicarbonsäure mit 6 bis 20 C-Atomen und 70 bis 5 Mol-%, bevorzugt 50 bis 7 Mol-% und besonders bevorzugt 30 bis 10 Mol-% der gleichen Dicarbonsäure mit 10 bis 36 C-Atomen wie im Polyamid des Haftvermittlers, sowie
   β) einem Diol mit 2 bis 12 C-Atomen.

Das im Haftvermittler enthaltene Blend besteht aus miteinander teilverträglichen Komponenten, wobei entweder das Polyamid oder der Polyester eine kontinuierliche Phase ausbildet und die andere Komponente darin dispers verteilt ist, oder es liegt ein interpenetrierendes Netzwerk vor, bei dem beide Phasen kontinuierlich sind. Die Teilverträglichkeit zeigt sich einerseits anhand rasterelektronenmikroskopischer Aufnahmen, andererseits anhand der guten mechanischen Eigenschaften des Blends. Anders als bei physikalischen Mischungen üblicher Polyamide und Polyester zeigt der erfindungsgemäße Haftvermittler eine sehr gute Haftung sowohl zu Polyamidformmassen als auch zu Polyesterformmassen. Diese sehr gute Haftung wird unabhängig davon erreicht, ob im Haftvermittler das Polyamid oder der Polyester die kontinuierliche Phase darstellt.

Im folgenden sollen die einzelnen Komponenten des Mehrschichtverbundes näher erläutert werden.

Als Polyamide der Schicht I kommen in erster Linie aliphatische Homo- und Copolykondensate in Frage, beispielsweise PA 46, PA 66, PA 612, PA 810, PA 1010, PA 1012, PA 1212, PA 6, PA 7, PA 8, PA 9, PA 10, PA 11 und PA 12. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α, ω-Aminocarbonsäure bzw. von dem davon abgeleiteten Lactam ausgegangen worden ist; im übrigen sei verwiesen auf H. Domininghaus, Die Kunststoffe und ihre Eigenschaften, Seiten 272 ff., VDI-Verlag, 1976.)

Sofern Copolyamide verwendet werden, können diese z. B. Adipinsäure, Sebacinsäure, Korksäure, Isophthalsäure, Terephthalsäure, Naphthalin-2.6-dicarbonsäure usw. als Cosäure bzw. Bis(4-aminocyclohexyl)methan, Trimethylhexamethylendiamin, Hexamethylendiamin oder ähnliches als Codiamin enthalten. Lactame wie Caprolactam oder Laurinlactam bzw. Aminocarbonsäuren wie ω-Aminoundecansäure können als Cokomponente ebenfalls eingebaut sein.

Die Herstellung dieser Polyamide ist bekannt (z. B. D. B. Jacobs, J. Zimmermann, Polymerization Processes, S. 424 - 467, Interscience Publishers, New York, 1977; DE-AS 21 52194).

Darüber hinaus sind als Polyamide auch gemischte aliphatisch/aromatische Polykondensate geeignet, wie sie z. B. in den US-PSS 2 071 250, 2 071 251, 2 130 523, 2 130 948, 2 241 322, 2 312 966, 2 512 606 und 3 393 210 sowie in Kirk-Othmer, Encyclopedia of Chemical Technology, 3. Aufl., Vol. 18, Seiten 328ff. und 435ff., Wiley & Sons, 1982, beschrieben werden. Weitere geeignete Polyamide sind Poly(etheresteramide) bzw. Poly(etheramide); derartige Produkte werden z. B. in den DE-OSS 25 23 991, 27 12 987 und 30 06 961 beschrieben.

Die Polyamidformmasse der Schicht I kann entweder eines dieser Polyamide oder mehrere als Gemisch enthalten. Weiterhin können bis zu 40 Gew.-% anderer Thermoplaste enthalten sein, sofern diese die Verbundfähigkeit nicht stören, insbesondere schlagzähmachende Kautschuke wie Ethylen/Propylen- oder Ethylen/Propylen/Dien-Copolymere (EP-A-0 295 076), Polypentenylen, Polyoctenylen, statistische bzw. blockartig aufgebaute Copolymere aus alkenylaromatischen Verbindungen mit aliphatischen Olefinen oder Dienen (EP-A-0 261 748) oder Kern/Schale-Kautschuke mit einem zähelastischen Kern aus (Meth)Acrylat-, Butadienoder Styrol/Butadien-Kautschuk mit Glastemperaturen T_{g}< -10 °C, wobei der Kern vernetzt sein kann und die Schale aus Styrol und/oder Methylmethacrylat und/oder weiteren ungesättigten Monomeren aufgebaut sein kann (DE-OSS 21 44 528, 37 28 685).

Der Polyamidformmasse der Schicht können die für Polyamide üblichen Hilfs- und Zusatzstoffe wie z. B. Flammschutzmittel, Stabilisatoren, Weichmacher, Verarbeitungshilfsmittel, Füllstoffe, insbesondere zur Verbesserung der elektrischen Leitfähigkeit, Verstärkungsfasem, Pigmente oder ähnliches zugefügt werden. Die Menge der genannten Mittel ist so zu dosieren, daß die gewünschten Eigenschaften nicht ernsthaft beeinträchtigt werden.

Als Polyester der Schicht II kommen linear aufgebaute, thermoplastische Polyester infrage. Diese werden durch Polykondensation von Diolen mit Dicarbonsäure bzw. deren polyesterbildenden Derivaten wie Dimethylestern hergestellt. Geeignete Diole haben die Formel HO-R-OH, wobei R einen divalenten, verzweigten oder unverzweigten aliphatischen und/oder cycloaliphatischen Rest mit 2 bis 12, vorzugsweise 2 bis 8, C-Atomen darstellt. Geeignete Dicarbonsäuren haben die Formel HOOC-R'-COOH, wobei R' einen divalenten aromatischen Rest mit 6 bis 20, vorzugsweise 6 bis 12, C-Atomen bedeutet.

Als Beispiel für Diole seien Ethylenglykol, Trimethylenglykol, Tetramethylenglykol, Hexamethylenglykol, Neopentylglykol und Cyclohexandimethanol genannt. Die Diole können alleine oder als Diolgemisch eingesetzt werden.

Bis zu 25 Mol-% des genannten Diols können durch ein Polyalkylenglykol mit nachstehender allgemeiner Formel ersetzt sein, 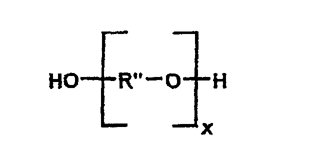 wobei R" einen zweiwertigen Rest mit 2 bis 4 C-Atomen bedeutet und x einen Wert von 2 bis 50 annehmen kann.

Als aromatische Dicarbonsäuren kommen z. B. Terephthalsäure, Isophthalsäure, 1.4-, 1.5-, 2.6- bzw. 2.7-Naphthalindicarbonsäure, Diphensäure und Diphenylether-4.4'-dicarbonsäure infrage. Bis zu 30 Mol-% dieser Dicarbonsäuren können durch aliphatische oder cycloaliphatische Dicarbonsäuren wie z. B. Bernsteinsäure, Adipinsäure, Sebacinsäure, Dodecansäure oder Cyclohexan-1.4-dicarbonsäure ersetzt sein.

Beispiele für geeignete Polyester sind Polyethylenterephthalat, Polypropylenterephthalat, Polybutylenterephthalat, Polyethylen-2.6-naphthalat, Polypropylen-2.6-naphthalat und Polybutylen-2.6-naphthalat.

Die Herstellung dieser Polyester gehört zum Stand der Technik (DE-OSS 24 07 155, 24 07 156; Ullmanns Encyclopädie der technischen Chemie, 4. Aufl., Bd. 19, Seiten 65ff., Verlag Chemie, Weinheim, 1980).

Die Polyesterformmasse der Schicht II kann entweder einen dieser Polyester oder mehrere als Gemisch enthalten. Weiterhin können bis zu 40 Gew.-% anderer Thermoplaste enthalten sein, sofern diese die Verbundfähigkeit nicht stören, insbesondere schlagzähmachende Kautschuke, wie oben für das Polyamid bereits angegeben. Weiterhin kann die Polyesterformmasse die für Polyester üblichen Hilfs- und Zusatzstoffe enthalten wie z. B. Flammschutzmittel, Stabilisatoren, Verarbeitungshilfsmittel, Füllstoffe, insbesondere zur Verbesserung der elektrischen Leitfähigkeit, Verstärkungsfasem, Pigmente oder ähnliches. Die Menge der genannten Mittel ist so zu dosieren, daß die gewünschten Eigenschaften nicht ernsthaft beeinträchtigt werden.

In der Regel besitzt die Formmasse der Schicht I eine kontinuierliche Polyamidphase und die Formmasse der Schicht II eine kontinuierliche Polyesterphase.

Der Haftvermittler enthält ein Polyamid, das mit dem Polyamid der Schicht I gut verträglich ist und somit eine gute Haftung ermöglicht. Gleichzeitig enthält er einen Polyester, der mit dem Polyester der Schicht II gut verträglich ist. Zusätzlich sind überraschenderweise Polyamid und Polyester des Haftvermittlers über das gemeinsame Monomere miteinander zumindest teilverträglich.

Das Polyamid des Haftvermittlers ist mit dem Polyamid der Schicht I in der Regel dann gut verträglich, wenn beide Polyamide mindestens einen Monomerbaustein, also Dicarbonsäure oder das Diamin, gemeinsam haben. Sehr häufig reicht es aber auch aus, wenn beide einen einander entsprechenden Monomerbaustein mit gleicher C-Atomzahl oder mit - gleicher Länge besitzen. Geeignete Polyamidkombinationen sind entweder dem Fachmann bekannt oder können durch einfache Routineversuche, z. B. mittels Preßplatten, leicht ermittelt werden.

Das Polyamid des Haftvermittlers enthält einen Monomerbaustein, der sich von einem Diamin mit 6 bis 12 C-Atomen herleitet. Geeignete Diamine sind beispielsweise Hexamethylendiamin, Trimethylhexamethylendiamin, Octamethylendiamin, Nonamethylendiamin, Decamethylendiamin und Dodecamethylendiamin. Von den zugehörigen Dicarbonsäurebausteinen leiten sich mindestens 5 Mol-% von einer Dicarbonsäure mit 10 bis 35 C-Atomen her wie 1.10-Decandisäure, 1.11-Undecandisäure, 1.12-Dodecandisäure, Dimerfettsäure oder Naphthalin-2,6-dicarbonsäure. Die restlichen Dicarbonsäurebausteine, falls vorhanden, leiten sich von jeder beliebigen anderen Dicarbonsäure her wie Adipinsäure, Korksäure, Terephthalsäure oder Isophthalsäure. Darüber hinaus kann das Polyamid im Einzelfall auch untergeordnete Mengen eines Lactams wie z. B. Caprolactam oder Laurinlactam bzw. einer Aminocarbonsäure wie z. B. ω-Aminoundecansäure einpolymerisiert enthalten, wobei jedoch darauf zu achten ist, daß hierdurch nicht der Schmelzpunkt zu stark abgesenkt werden darf und außerdem die Verträglichkeit der einzelnen Komponenten nicht beeinträchtigt werden darf.

Diamin(e) und Dicarbonsäure(n) werden zur Herstellung dieses Polyamids in Mengen eingesetzt, die im wesentlichen stöchiometrisch äquivalent sind. Dies bedeutet, daß sie in so weitgehend äquimolaren Mengen eingesetzt werden, daß ein hochmolekulares Polyamid entsteht, so daß das daraus hergestellte Blend coextrudiert werden kann. Ein geringer Überschuß an Diamin oder Dicarbonsäure kann jedoch als Molekulargewichtsregler erwünscht sein. Falls gewünscht, kann jedoch bei der Polykondensation statt dessen auch ein monofunktioneller Regler wie z. B. Stearinsäure, Benzoesäure oder Stearylamin zugesetzt werden.

Der Polyester des Haftvermittlers wird nach bekannten Methoden aus Diol(en) und Dicarbonsäure(n) oder deren esterbildenden Derivaten hergestellt. Als aromatische Dicarbonsäure mit 6 bis 20 C-Atomen und als Diol können die gleichen Verbindungen eingesetzt werden, wie sie beim Polyester der Schicht II angeführt sind. Der Polyester des Haftvermittlers ist mit dem Polyester der Schicht II in der Regel dann gut verträglich, wenn beide Polyester mindestens einen Monomerbaustein, also Dicarbonsäure oder das Diol gemeinsam haben oder wenn entsprechende Monomerbausteine zumindest ähnlich sind. Geeignete Polyesterkombinationen sind entweder dem Fachmann bekannt oder können durch einfache Preßplattenversuche leicht ermittelt werden.

Der Haftvermittler kann neben dem Polyamid und dem Polyester auch einen schlagzähmachenden Kautschuk und/oder Hilfs- bzw. Zuschlagstoffe enthalten, wie sie weiter oben als mögliche Bestandteile der Schichten I und II näher erläutert sind.

Beim erfindungsgemäßen Mehrschichtverbund handelt es sich in einer Ausführungsform um ein Rohr, einen Einfüllstutzen oder um einen Behälter, insbesondere zur Leitung oder Bevorratung von Flüssigkeiten oder Gasen. Ein derartiges Rohr kann in gerader oder in gewellter Form ausgeführt sein oder es ist nur in Teilabschnitten gewellt. Wellrohre sind Stand der Technik (z. B. US 5 460 771 ), weshalb sich weitere Ausführungen hierzu erübrigen. Wichtige Einsatzzwecke sind die Verwendung als Kraftstoffleitung, als Tankeinfüllstutzen, als Vapor Line (d. h. Leitung, in der Kraftstoffdämpfe geleitet werden, z. B. Entlüftungsleitungen), als Tankstellenleitung, als Kühlflüssigkeitsleitung, als Klimaanlagenleitung oder als Kraftstoffbehälter.

Der erfindungsgemäße Mehrschichtverbund kann auch als flächiger Verbund vorliegen, beispielsweise als Folie, etwa als Verpackungsfolie für Lebensmittel, als Verbundkörper mit Deckschicht zur Verbesserung der UV-Beständigkeit oder als extrudierte Mehrschichttafel.

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen Oberflächenwiderstand von maximal 10⁹ Ω cm.

Bei der Ausführung des erfindungsgemäßen Mehrschichtverbundes als Rohr kann dieses noch mit einer zusätzlichen Elastomerschicht ummantelt sein. Zur Ummantelung eignen sich sowohl vemetzende Kautschukmassen als auch thermoplastische Elastomere. Die Ummantelung kann sowohl mit als auch ohne Verwendung eines zusätzlichen Haftvermittlers auf das Rohr aufgebracht werden, beispielsweise mittels Extrusion über einen Querspritzkopf oder dadurch, daß ein vorgefertigter Elastomerschlauch über das fertig extrudierte Mehrschichtrohr geschoben wird.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion oder des Coextrusionsblasformens, oder mittels mehrstufiger Verfahren, wie z. B. in US 5 554 425 beschrieben.

Der Mehrschichtverbund kann in der einfachsten Ausführungsform aus der Schicht I, dem Haftvermittler und der Schicht II bestehen; unter Verwendung zusätzlicher Schichten können aber auch beispielsweise folgende Schichtenkonfigurationen vorliegen:
Kautschuk/Schicht I/Haftvermittler/Schicht II;
Schicht I/Haftvermittler/Schicht II/elektrisch leitfähige Schicht II;
Schicht I/Haftvermittler/Schicht II/Haftvermittler/Schicht I;
Schicht I/Haftvermittler/Schicht II/Haftvermittler/elektrisch leitfähig eingestellte Schicht I;
Kautschuk/Schicht I/Haftvermittler/Schicht II/Haftvermittler/Schicht I/leitfähig eingestellte Schicht I;
Schicht II/Haftvermittler/Schicht I/elektrisch leitfähige Schicht I.

Die Erfindung soll im Folgenden beispielhaft erläutert werden.

### Beispiele:

In den Versuchen wurden folgende Komponenten verwendet:

### Polyamid der Schicht I:

- PA 1:: VESTAMID L 2140, ein PA 12 mit einer relativen Viskosität ηᵣₑₗ von 2,1
- PA 2:: VESTAMID L 2124, ein weichmacherhaltiges PA 12 mit einer relativen Viskosität ηᵣₑₗ von 2,1

### Polyamid des Haftvermittlers:

- PA 3:: VESTAMID D 16, ein PA 612 (Monomerenbasis Hexamethylendiamin und 1.12-Dodecandisäure) der Degussa-Hüls AG, D-45764 Marl mit einer relativen Viskosität ηᵣₑₗ von 1,6
- PA 4:: VESTAMID D 22, ein PA 612 der Degussa-Hüls AG mit ηᵣₑₗ = 2,1

### Polyester der Schicht 11:

- PES 1:: VESTODUR 1000, ein Homopolybutylenterephthalat der Degussa-Hüls AG mit einer Lösungsviskosität J, gemessen in Phenol/o-Dichlorbenzol (1 : 1), von 107 cm³/g
- PES 2:: VESTODUR 2000, ein Homopolybutylenterephthalat der Degussa-Hüls AG mit einer Lösungsviskosität J von 145 cm³/g

### Polyester des Haftvermittlers:

- PES 3:: Copolyester aus Terephthalsäure (85 Mol-%) und 1.12-Dodecandisäure (15 Mol-%) sowie Butandiol-1.4, Lösungsviskosität von 180 cm³/g
- PES 4:: Copolyester aus Terephthalsäure (85 Mol-%) und 1.12-Dodecandisäure (15 Mol-%) sowie Butandiol-1.4, Lösungsviskosität J von 120 cm³/g

### Haftvermittler (zur besseren Vergleichbarkeit jeweils 1 : 1 Volumenteile):

### HV 1 (nicht erfindungsgemäß):

43,8 Gew.-Teile PA 1 und 56,2 Gew.-Teile PES 1 wurden auf einem Doppelschneckenkneter ZE 25 33D der Firma Berstorff bei 280 °C und 200 U/min und einem Durchsatz von 10 kg/h schmelzegemischt, stranggepreßt und granuliert.
Rasterelektronenmikroskopische Aufnahmen zeigen, daß das Blend eine kontinuierliche PBT-Phase und eine disperse PA 12-Phase aufweist.

### HV 2 (nicht erfindungsgemäß):

Wie HV 1, nur mit dem Unterschied, daß bei 270 °C schmelzegemischt wurde. Auch hier weist das Blend eine kontinuierliche PBT-Phase und eine disperse PA 12-Phase auf.

### HV 3 (erfindungsgemäß):

9,18 kg PA 3 und 10,81 kg PES 3 wurden auf einem Doppelschneckenkneter ZE 25 33D der Firma Berstorff bei 290 °C und 250 U/min und einem Durchsatz von 10 kg/h schmelzegemischt, stranggepreßt und granuliert.
Rasterelektronenmikroskopische Aufnahmen zeigen, daß das Blend eine kontinuierliche Polyamidphase und eine disperse Polyesterphase aufweist.

### HV 4 (erfindungsgemäß):

Wie HV 3, aber mit dem Unterschied, daß PA 4 und PES 4 verwendet wurden. Rasterelektronenmikroskopische Aufnahmen zeigen, daß das Blend eine kontinuierliche Polyesterphase und eine disperse Polyamidphase aufweist.

### HV 5 erfindungsgemäß):

Wie HV 3, aber mit dem Unterschied, daß PA 4 statt PA 3 eingesetzt wurde. Auch hier weist das Blend eine kontinuierliche Polyesterphase und eine disperse Polyamidphase auf.

Zur Herstellung der Mehrschichtverbunde wurde ein Bändchencoextrusionswerkzeug verwendet mit einer Austrittsbreite von 30 mm, wobei die Zusammenführung der verschiedenen Schichten im Werkzeug kurz vor dem Austritt der Schmelze aus dem Werkzeug erfolgte. Das Werkzeug wurde hierbei von drei Storck 25-Extrudem gespeist. Nach dem Austritt aus dem Werkzeug wurde der Dreischichtverbund auf eine Kühlwalze aufgelegt und abgezogen (Chill-Roll-Verfahren).

Die Ergebnisse sind in der folgenden Tabelle wiedergegeben; die dort angegebenen Haftungsnoten bedeuten:
0 keine Haftung
1 geringfügige Haftung
2 etwas Haftung; mit geringem Aufwand zu trennen
3 gute Haftung; nur mit großem Aufwand und gegebenenfalls mit Hilfe von Werkzeugen zu trennen
4 nicht trennbar, auch nicht nach 30 Minuten in Lipoxol bei 160 °C

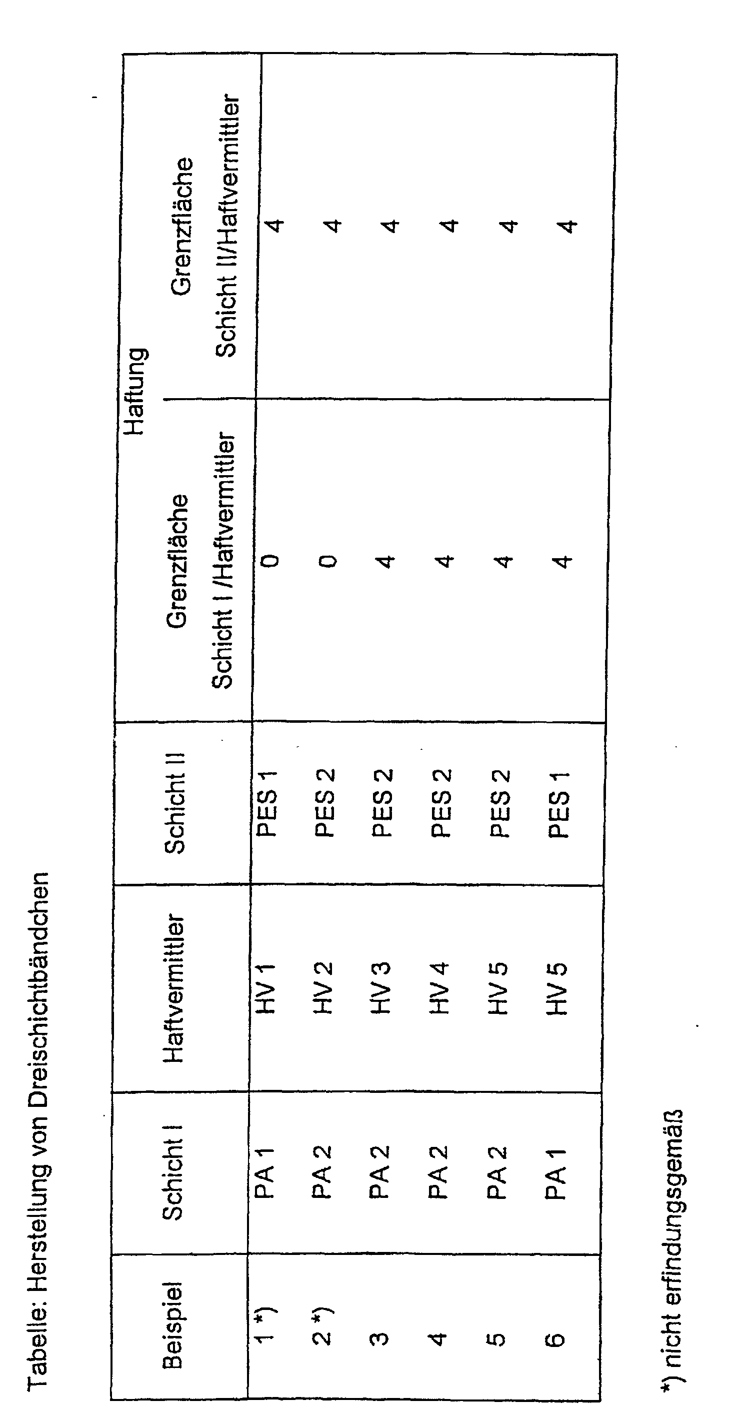

## Patentansprüche

1. Formmasse, die zu mindestens 50 Gew.-% ein Blend aus folgenden Komponenten enthält:
a) 20 bis 80 Gew.-% eines Polyamids, hergestellt aus
α) Diamin mit 6 bis 12 C-Atomen sowie
β) einer hierzu im wesentlichen stöchiometrisch äquivalenten Menge von Dicarbonsäure, wobei die Dicarbonsäure mindestens 5 Mol-% einer Dicarbonsäure mit 10 bis 36 C-Atomen enthält,
sowie
b) 80 bis 20 Gew.-% eines Polyesters, hergestellt aus
α) einem Gemisch aus 30 bis 95 Mol-% einer aromatischen Dicarbonsäure mit 6 bis 20 C-Atomen und 70 bis 5 Mol-% der gleichen Dicarbonsäure mit 10 bis 36 C-Atomen wie im Polyamid des Haftvermittlers, sowie
β) einem Diol mit 2 bis 12 C-Atomen.

2. Thermoplastischer Mehrschichtverbund, der folgende Schichten enthält:
I. eine Schicht I aus einer Polyamid-Formmasse;
II. eine Schicht II aus einer Polyester-Formmasse;
dazwischen eine Schicht aus einem Haftvermittler, der aus der Formmasse gemäß Anspruch 1 besteht.

3. Mehrschichtverbund gemäß Anspruch 2,
**dadurch gekennzeichnet,**
**daß** er mehr als eine Schicht I und/oder mehr als eine Schicht II enthält.

4. Mehrschichtverbund gemäß einem der Ansprüche 2 und 3,
**dadurch gekennzeichnet,**
**daß** sich an die äußerste Schicht noch eine Kautschukschicht anschließt.

5. Mehrschichtverbund gemäß einem der Ansprüche 2 bis 4,
**dadurch gekennzeichnet,**
**daß** eine der Schichten elektrisch leitfähig eingestellt ist.

6. Mehrschichtverbund gemäß einem der Ansprüche 2 bis 4,
**dadurch gekennzeichnet,**
**daß** sich an die innerste Schicht noch eine zusätzliche, elektrisch leitfähige Schicht anschließt.

7. Mehrschichtverbund gemäß einem der Ansprüche 2 bis 6,
**dadurch gekennzeichnet,**
**daß** er ein Rohr ist.

8. Mehrschichtverbund gemäß Anspruch 7,
**dadurch gekennzeichnet,**
**daß** er vollständig oder in Teilbereichen gewellt ist.

9. Mehrschichtverbund gemäß einem der Ansprüche 2 bis 6,
**dadurch gekennzeichnet,**
**daß** er ein Hohlkörper ist.

10. Mehrschichtverbund gemäß einem der Ansprüche 2 bis 8,
**dadurch gekennzeichnet,**
**daß** er eine Kraftstoffleitung, eine Bremsflüssigkeitsleitung, eine Kühiflüssigkeitsleitung, eine Hydraulikflüssigkeitsleitung, eine Tankstellenleitung, eine Klimaanlagenleitung oder eine Vapor Line ist.

11. Mehrschichtverbund gemäß einem der Ansprüche 2 bis 6 sowie 9,
**dadurch gekennzeichnet,**
**daß** er ein Behälter, insbesondere ein Kraftstoffbehälter, oder ein Einfüllstutzen, insbesondere ein Tankeinfüllstutzen ist.

12. Mehrschichtverbund gemäß einem der Ansprüche 2 bis 6,
**dadurch gekennzeichnet,**
**daß** er eine Folie oder eine Mehrschichttafel ist.

13. Verfahren zur Herstellung des Mehrschichtverbundes gemäß einem der Ansprüche 2 bis 12,
**dadurch gekennzeichnet,**
**daß** der Verbund mittels Mehrkomponentenspritzguß, Coextrusion oder Coextrusionsblasformen hergestellt wird.

## Claims

1. A moulding composition which comprises at least 50% by weight of a blend made from the following components:
a) from 20 to 80% by weight of a polyamide, prepared from
α) diamine having from 6 to 12 carbon atoms, and from
β) an essentially stoichiometrically equivalent amount of dicarboxylic acid, where the dicarboxylic acid comprises at least 5 mol% of a dicarboxylic acid having from 10 to 36 carbon atoms,
and also
b) from 80 to 20% by weight of a polyester, prepared from
α) a mixture of from 30 to 95 mol% of an aromatic dicarboxylic acid having from 6 to 20 carbon atoms and from 70 to 5 mol% of the same dicarboxylic acid as in the polyamide of the adhesion promoter, having from 10 to 36 carbon atoms, and from
β) a diol having from 2 to 12 carbon atoms.

2. A thermoplastic composite having more than one layer and comprising the following layers:
I. a layer I made from a polyamide moulding composition, and
II. a layer II made from a polyester moulding composition,
and between these a layer made from an adhesion promoter which is composed of the moulding composition according to claim 1.

3. A composite having more than one layer according to claim 2, **characterized in that** it comprises more than one layer I and/or more than one layer II.

4. A composite having more than one layer according to either one of claims 2 and 3, **characterized in that** there is also a rubber layer adjoining the outermost layer.

5. A composite having more than one layer according to any one of claims 2 to 4, **characterized in that** one of the layers has been rendered electrically conductive.

6. A composite having more than one layer according to any one of claims 2 to 4, **characterized in that** there is also an additional electrically conductive layer adjoining the innermost layer.

7. A composite having more than one layer according to any one of claims 2 to 6, **characterized in that** it is a pipe.

8. A composite having more than one layer according to claim 7, **characterized in that** it has been corrugated, in some areas or in its entirety.

9. A composite having more than one layer according to any one of claims 2 to 6, **characterized in that** it is a hollow article.

10. A composite having more than one layer according to any one of claims 2 to 8, **characterized in that** it is fuel piping, brake-fluid piping, coolant piping, hydraulic-fluid piping, fuel-pump piping, air-conditioner piping or a vapour line.

11. A composite having more than one layer according to any one of claims 2 to 6 and 9, **characterized in that** it is a container, in particular a fuel container, or a filler pipe, in particular a filler pipe of a tank.

12. A composite having more than one layer according to any one of claims 2 to 6, **characterized in that** it is a film or a panel having more than one layer.

13. A process for producing the composite having more than one layer according to any one of claims 2 to 12, **characterized in that** the composite is produced by multicomponent injection moulding, coextrusion or coextrusion blow moulding.

## Revendications

1. Masse moulée qui contient pour au moins 50 % en poids, un mélange à base des composants suivants :
a) de 20 à 80 % en poids d'un polyamide produit à partir de :
α) une diamine ayant de 6 à 12 atomes de carbone ainsi que,
β) une quantité équivalente stoechiométriquement à cet effet pour l'essentiel, d'acide dicarboxylique, dans laquelle l'acide dicarboxylique renferme au moins 5 % molaire d'un acide dicarboxylique ayant de 10 à 36 atomes de carbone, ainsi que
b) de 80 à 20 % en poids d'un polyester produit à partie de :
α) un mélange à base de 30 à 95 % molaire d'un acide dicarboxylique aromatique ayant de 6 à 20 atomes de carbone et de 70 à 5 % molaires du même acide dicarboxylique ayant de 10 à 36 atomes de carbone que dans le polyamide de l'adjuvant d'adhésion, ainsi que
β) d'un diol ayant de 2 à 12 atomes de carbone.

2. Composite en plusieurs couches thermoplastiques qui renferme les couches suivantes :
I. une couche I à base d'une masse moulée de polyamide,
II. une couche II à base d'une masse moulée de polyester
entre les deux une couche à base d'un adjuvant d'adhésion qui consiste en la masse moulée conformément à la revendication 1.

3. Composite en plusieurs couches conformément à la revendication 2,
**caractérisé en ce qu'**
il contient plus d'une couche I et/ou plus d'une couche II.

4. Composite en plusieurs couches conformément à l'une quelconque des revendications 2 et 3,
**caractérisé en ce qu'**
encore une couche de caoutchouc s'adjoint à la couche la plus externe.

5. Composite en plusieurs couches conformément à l'une quelconque des revendications 2 à 4,
**caractérisé en ce que**
l'une des couches est ajustée de manière à être conductrice de l'électricité.

6. Composite en plusieurs couches conformément à l'une quelconque des revendications 2 à 4,
**caractérisé en ce qu'**
encore une couche apte à conduire le courant électrique, supplémentaire est adjointe à la couche la plus interne.

7. Composite en plusieurs couches conformément à l'une quelconque des revendications 2 à 6,
**caractérisé en ce qu'**
il est un tube.

8. Composite en plusieurs couches conformément à la revendication 7,
**caractérisé en ce qu'**
il est ondulé complètement ou dans des zones partielles.

9. Composite en plusieurs couches conformément à l'une quelconque des revendications 2 à 6,
**caractérisé en ce qu'**
il est un solide creux.

10. Composite en plusieurs couches conformément à l'une quelconque des revendications 2 à 8,
**caractérisé en ce qu'**
il est une conduite de carburant, une conduite de liquide de freins, une conduite de liquide de refroidissement, une conduite de liquide hydraulique, une conduite de réservoir d'essence, une conduite d'installation de climatisation, ou une « Vapor Line » (conduite pour vapeurs de carburant) .

11. Composite en plusieurs couches conformément à l'une quelconque des revendications 2 à 5,
**caractérisé en ce qu'**
il est un récipient en particulier un réservoir de carburant ou un bouchon de remplissage, en particulier un bouchon de remplissage d'essence.

12. Composite en plusieurs couches conformément à l'une quelconque des revendications 2 à 6,
**caractérisé en ce qu'**
il est une feuille ou une plaque en plusieurs couches.

13. Procédé de production d'un composite en plusieurs couches conformément à l'une quelconque des revendications 2 à 12,
**caractérisé en ce que**
le composite est produit à l'aide d'une coulée par injection de plusieurs composants par coextrusion ou par moulage par formation de bulles par extrusion.
